# EUROPEAN PATENT SPECIFICATION

(11) **EP 3 879 913 B1**
(45) Date of publication and mention of the grant of the patent: **30.08.2023**
(21) Application number: 20834804.5
(22) Date of filing: 29.06.2020
(51) Int. Cl.: H04L 5/00, H04W 72/21, H04W 72/23

(54) **METHOD AND DEVICE FOR CONFIRMING SET RESOURCE IN WIRELESS COMMUNICATION SYSTEM**
VERFAHREN UND VORRICHTUNG ZUR BESTÄTIGUNG VON EINGESTELLTEN RESSOURCEN IN EINEM DRAHTLOSKOMMUNIKATIONSSYSTEM
PROCÉDÉ ET DISPOSITIF DE CONFIRMATION DE RESSOURCE DÉFINIE DANS UN SYSTÈME DE COMMUNICATION SANS FIL

(30) Priority: 03.07.2019 KR 20190080251; 18.11.2019 KR 20190147854
(43) Date of publication of application: 15.09.2021
(73) Proprietor: Samsung Electronics Co., Ltd., Suwon-si, Gyeonggi-do 16677 (KR)
(72) Inventor: BAEK, Sangkyu, Suwon-si, Gyeonggi-do 16677 (KR); AGIWAL, Anil, Suwon-si, Gyeonggi-do 16677 (KR); JANG, Jaehyuk, Suwon-si, Gyeonggi-do 16677 (KR)
(74) Representative: Nederlandsch Octrooibureau
(86) International application number: PCT/KR2020/008435
(87) International publication number: WO 2021/002644

(56) References cited:
- WO-A1-2019/084570
- US-A1- 2018 139 734
- CMCC: "Outstanding Issues for multiple SPSs-CGs Support", 3GPP DRAFT; R2-1904355 SUPPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 29 March 2019 (2019-03-29), pages 1-7, XP051693575, Retrieved from the Internet: URL:http://www.3gpp.org/ftp/tsg%5Fran/WG2% 5FRL2/TSGR2%5F105bis/Docs/R2%2D1904355%2Ez ip [retrieved on 2019-03-30]
- SAMSUNG: "UL configured grants for eURLLC", 3GPP TSG RAN WG1 #97, R1-1906960,, 3 May 2019 (2019-05-03), XP051708995, Reno, USA
- "3rd Generation Partnership Project; Technical Specification Group Radio Access Network; NR; Medium Access Control (MAC) protocol specification (Release 15)", 3GPP TS 38.321, no. V15.6.0, 29 June 2019 (2019-06-29), XP051754478,
- NOKIA: "On Enhanced UL Configured Grant Transmission for NR URLLC", 3GPP TSG RAN WG1 Meeting #97, R1-1906757,, 3 May 2019 (2019-05-03), XP051708793, Reno, NV, USA
- VIVO: "Enhanced UL configured grant transmissions for URLLC", 3GPP TSG RAN WG1 #97, R1-1906151,, 1 May 2019 (2019-05-01), XP051708192, Reno, USA

## Description

### [Technical Field]

The disclosure relates to operations of a user equipment and a base station in a mobile communication system.

### [Background Art]

To meet the demand for wireless data traffic having increased since deployment of 4G communication systems, efforts have been made to develop an improved 5G or pre-5G communication system. Therefore, the 5G or pre-5G communication system is also called a "Beyond 4G Network" or a "Post LTE System". The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (RAN) as the above-described big data processing technology may also be considered an example of convergence of the 5G technology with the IoT technology.

Meanwhile, there is a need for a method, in connection with a resource allocation scheme, configured such that, if a radio resource is allocated according to a configured scheduling scheme, a user equipment can inform the base station whether or not the allocated radio resource is activated.

### Prior Art

CMSS Outstanding Issues for multiple SPSs CGs Support, 3GPP DRAFT; R2-1904355 indicates a type 2 configured grant corresponding to a configured grant index in a particular BWP configured for a particular serving cell.

US 2018/139734 A1 discloses a field included in a confirmation MAC CE indicates an SPS configuration corresponding to an SPS configuration index in a particular cell.

### [Disclosure of Invention]

### [Technical Problem]

According to an embodiment, there is a need for a method, in connection with a resource allocation scheme, configured such that, if a radio resource is allocated according to a configured scheduling scheme and then activated or deactivated, a user equipment can inform the base station of the activation or deactivation of the allocated radio resource.

### [Solution to Problem]

The object of the present invention is achieved by the features of the appended independent claims. Embodiments which do not fall within the scope of the claims should be seen as mere examples useful for understanding the invention.

### [Advantageous Effects of Invention]

According to the disclosure, a base station can easily allocate a radio resource according to a configured scheduling scheme, and a user equipment can inform the base station of activation or deactivation of the allocated radio resource.

### [Brief Description of Drawings]

FIG. 1 is a diagram illustrating an operation method of a configured grant;
FIG. 2 is a diagram illustrating a procedure for configuring and activating a type 1 configured grant;
FIG. 3 is a diagram illustrating a procedure for configuring and activating a type 2 configured grant;
FIG. 4 is a diagram illustrating a confirmation message format of a type 2 configured grant proposed by the disclosure;
FIG. 5 is a diagram illustrating a confirmation message format of a type 2 configured grant proposed by the disclosure;
FIG. 6 is a diagram illustrating a confirmation message format of a type 2 configured grant proposed by the disclosure;
FIG. 7 is a diagram illustrating a confirmation message format of a type 2 configured grant proposed by the disclosure;
FIG. 8 is a diagram illustrating a method of configuring a configured grant index for each cell;
FIG. 9 is a diagram illustrating a method of configuring a configured grant index for each BWP;
FIG. 10 is a diagram illustrating a method of applying a variable format of a configured grant confirmation message;
FIG. 11 is a diagram illustrating a method of assigning a type 1 configured grant index and a type 2 configured grant index;
FIG. 12 is a diagram illustrating a method of assigning a configured grant index;
FIG. 13 is a diagram illustrating a method of assigning a configured grant index;
FIG. 14 is a diagram illustrating a procedure for configuring and activating a type 2 configured grant in a sidelink for direct communication between UEs;
FIG. 15 is a diagram illustrating a procedure for configuring and activating a type 2 configured grant in a sidelink for direct communication between UEs;
FIG. 16 is a diagram illustrating a base station structure according to an embodiment of the disclosure.
FIG. 17 is a diagram illustrating a UE structure according to an embodiment of the disclosure;
FIG. 18 is a diagram illustrating a confirmation message format of a type 2 configured grant according to an embodiment of the disclosure; and
FIG. 19 is a diagram illustrating a confirmation message format of a type 2 configured grant according to another embodiment of the disclosure.

### [Mode for the Invention]

Hereinafter, the operation principle of the disclosure will be described in detail with reference to the accompanying drawings. In the following description of the disclosure, a detailed description of known functions or configurations incorporated herein will be omitted when it may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, a detailed description of known functions or configurations incorporated herein will be omitted when it may make the subject matter of the disclosure unnecessarily unclear. Hereinafter, embodiments of the disclosure will be described with reference to the accompanying drawings.

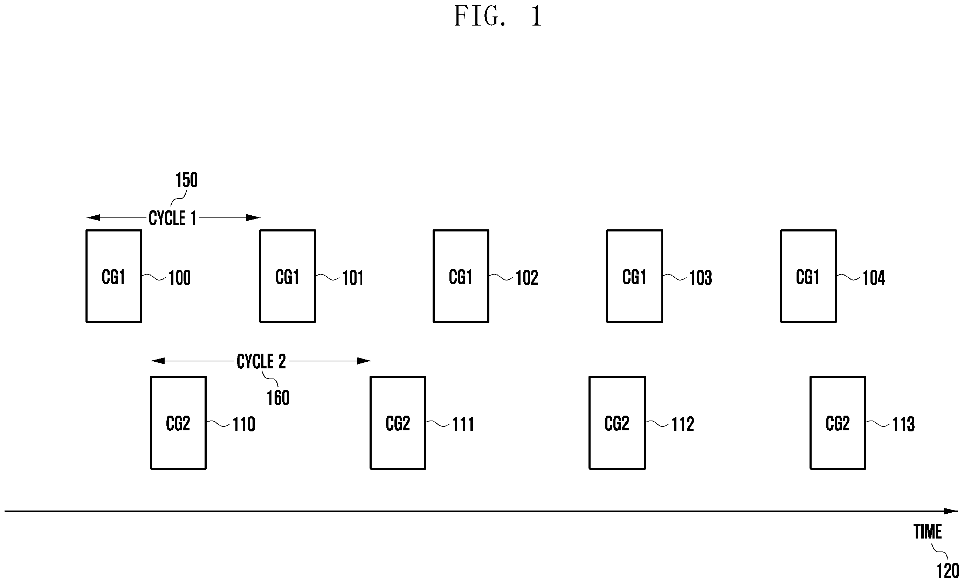

The following paragraphs describe embodiments, aspects and examples that are not specifically claimed but may be useful for understanding the invention. FIG. 1 illustrates an operation method of configured grants. In a wireless communication system, a base station may use a method of allocating resources by determining which radio resource a UE will use to transmit. The methods of allocating resources may include dynamic scheduling that allocates resources to be used for each slot, sub slot, frame, and subframe, which are basic units that use resources on the time axis, and configured scheduling that informs the commonly used configurations, including the period of available resources, and the like. The radio resource allocated by the configured scheduling may be referred to as a configured grant (CG), and the configured grant may be configured by transmission of a radio resource control (RRC) message transmitted from the base station to the UE. Information that can be configured by the RRC message may include frequency hopping configuration, demodulation reference signal (DMRS) configuration, modulation and coding scheme (MCS) table to be used, resource allocation type, whether to use power control loop, whether to repetition, periodicity, configured grant timer value, antenna port, MCS index, frequency hopping offset, time domain offset, time domain allocation, and the like. In addition, the corresponding information may be included in the configured grant config in the RRC message. The embodiment of FIG. 1 illustrates a situation in which two configured grants are configured, the first configured grants (CG1) 100, 101, 102, 103, and 104 and the second configured grants (CG2) 110, 111, 112, and 113. As illustrated, it is also possible to configure a plurality of configured grants within the same UE, within the same cell, or within the same bandwidth part (BWP). Each configured grant has a period 150, 160 configured in the time axis 120 by the RRC message, or the like, and according to this period, configured grant resources can be repeated.

The configured grants have a type 1 configured grant and a type 2 configured grant according to its characteristics. The type 1 configured grant refers to a configured grant in which all the setting values of the corresponding configured grant are delivered as the RRC message and no other base station controls. The type 1 configured grant does not have a separate activation or deactivation procedure, and once the type 1 configured grant is configured, the type 1 configured grant is continuously applied before the configuration is released. In the type 2 configured grant, some configurations of the configured grant are transmitted as the RRC message, and after the setting, the base station transmits an activation message to actually activate the type 2 configured grant. Upon receiving the activation message for the type 2 configured grant, the UE may transmit a configured grant confirmation message indicating that the configured grant has been activated to the base station. The configured grant confirmation message may have a control element (CE) format of a medium access control (MAC) layer. In addition, the base station may transmit a deactivation message for deactivating the type 2 configured grant. The UE receiving the type 2 configured grant deactivation message may transmit a configured grant confirmation message indicating that the configured grant has been deactivated to the base station.

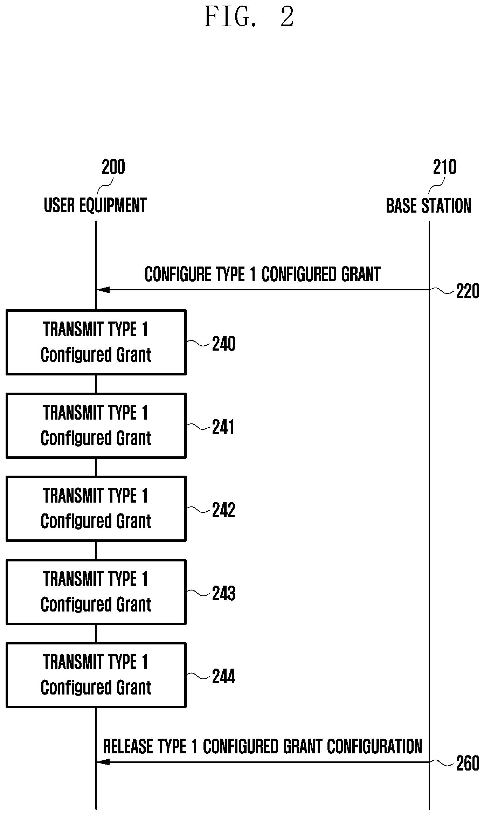

FIG. 2 illustrates a procedure for configuring and activating type 1 configured grants. The UE 200 may receive the RRC message by the base station 210, and the RRC message may include configuration information of the type 1 configured grant (220). In the embodiment of FIG. 2, it is illustrated that the type 1 configured grants is configured in the corresponding UE 200. Since there is no separate activation procedure for the type 1 configured grant, all configuration information necessary for resource use should be included in the configuration message. Information included here may include frequency hopping configuration, demodulation reference signal (DMRS) configuration, modulation and coding scheme (MCS) table to be used, resource allocation type, whether to use power control loop, whether to perform repetition, periodicity, configured grant timer value, antenna port, MCS index, frequency hopping offset, time domain offset, time domain allocation, and the like. In addition, a configured grant index, which is an identifier capable of identifying the type 1 configured grant to be configured, may be included. The configured grant index may be used together with the type 1 configured grant and the type 2 configured grant. This configured grant index may be uniquely configured in a cell group, uniquely configured in a cell, or uniquely configured in a BWP. The information may be included in the configured grant config in the RRC message. The type 1 configured grant is configured in step 220 and activated at the same time, so that data can be transmitted using a specified radio resource at specified times 240, 241, 242, 243, and 244. In FIG. 2, it is assumed that the resource of the type 1 configured grant can be periodically transmitted five times, but it means that one resource is allocated at every configured cycle. Since there is no separate activation and deactivation procedure for the type 1 configured grant, the configured grant confirmation procedure is not required. If there is no data to be transmitted in the configured grant allocated by the UE, a skipping operation in which transmission is not performed without using the configured grant may be performed. When it is determined that the type 1 configured grant setting is no longer necessary, the base station 210 may send a type 1 configured grant release message (260) to the UE to release the type 1 configured grant having been configured.

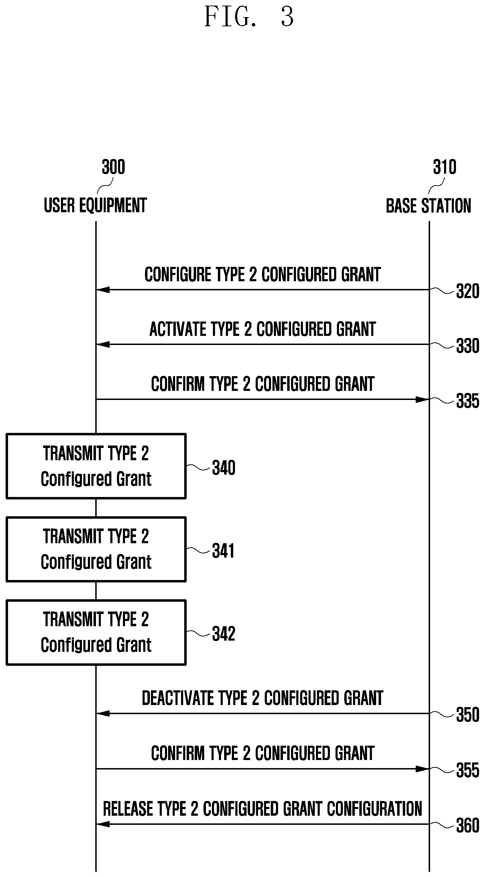

The following is related to a claimed embodiment. FIG. 3 illustrates a procedure for configuring and activating a type 2 configured grant. The UE (300) receives the RRC message by the base station (310), and the RRC message may include configuration information of the type 2 configured grant (320). In the embodiment of FIG. 3, it illustrates that the type 2 configured grant is configured in the corresponding UE 300. Since the type 2 configured grant has an activation procedure, only some pieces of configuration information necessary for resource use may be included in the configuration message (320). Information included here include frequency hopping configuration, demodulation reference signal (DMRS) configuration, modulation and coding scheme (MCS) table to be used, resource allocation type, whether to use power control loop, whether to perform repetition, periodicity, configured grant timer value, and the like to be used for the type 2 configured grant. In addition, a configured grant index, which is an identifier capable of identifying the type 2 Configured grant to be configured, is included. The configured grant index may be used together with the type 1 configured grant and the type 2 configured grant. This configured grant index is uniquely configured in a cell group and may be uniquely configured in a cell, or uniquely configured in a BWP. The information may be included in the configured grant config in the RRC message. Even if the type 2 configured grant is configured (320), the corresponding resource is not actually allocated until there is an activation instruction from the base station. After the type 2 configured grant is configured (320), the base station activates the type 2 configured grant by transmitting the type 2 configured grant activation message to the UE (330). Information that may be included in the activation message may include antenna port, MCG index, frequency hopping offset, time domain offset, time domain allocation, and the like to be used for the type 2 configured grant. After activating the type 2 configured grant that has received the activation indication, the UE transmits the type 2 configured grant confirmation message to the base station to inform that activation is complete (335). After activation, the UE may transmit data using a specified radio resource at a specified time (340, 341, and 342). In FIG. 3, it is assumed that the resource of the type 2 configured grant can be periodically transmitted three times, but it means that one resource is allocated at every configured cycle. If there is no data to be transmitted in the configured grant allocated to the UE, a skipping operation in which transmission is not performed without using the configured grant may be performed. If transmission using the type 2 configured grant is not required, the base station 310 indicates the UE to deactivate the type 2 configured grant (350), and the UE informs the base station that the deactivation is complete by transmitting a type 2 Configured grant confirmation message to the base station (355) after deactivating the type 2 configured grant. In addition, when it is determined that the type 2 configured grant setting is no longer necessary, the base station 310 may send a type 2 configured grant release message (360) to the UE to release the type 2 configured grant having been configured.

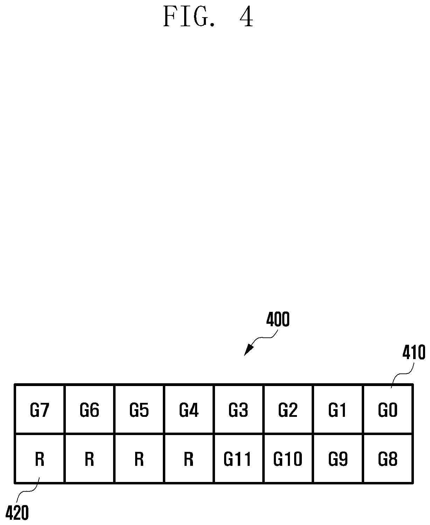

FIG. 4 illustrates a confirmation message format of a type 2 configured grant proposed by the disclosure. As described in FIG. 3, when the type 2 configured grant is activated or deactivated, the UE transmits the configured grant confirmation message to the base station to inform whether the corresponding configured grant has been activated or deactivated. If the number of type 2 configured grants configured in the UE and activated or deactivated is a large number, the configured grant confirmation message needs to include information on which configured grant has been activated or deactivated. In the embodiment of FIG. 4, the configured grant confirmation message having a medium access control (MAC) control element (CE) format is assumed, but there is no restriction on having any detailed format. The configured grant confirmation message 400 of the embodiment of FIG. 4 may have a Gi field (i=0, 1, ...) 410 indicating a bit indicating an activation state of the configured grant having been configured and a reserved field 420 that is not used.

The Gi field 410 is a field indicating activation or deactivation of the i^{th} configured grant by a 1-bit indicator. For example, if the value of the Gi field 410 is 1, the corresponding configured grant is activated, and if the value is 0, the corresponding configured grant is deactivated.

In another embodiment, the Gi field may be used as a bit indicating that the configuration of the base station has been applied to the type 2 configured grant indicated by the base station to activate or deactivate. In this case, if the Gi field has a value of 1, it can be confirmed that activation or deactivation of the type 2 configured grant has been applied, and if the Gi field has a value of 0, it can be confirmed that activation or deactivation of the type 2 configured grant has not been applied.

The following paragraphs describe embodiments, aspects and examples that are not specifically claimed but may be useful for understanding the invention. In this case, the method of configuring the i^{th} configured grant may be one of the following.
- The configured grant with i as the configured grant index value may be the i^{th} configured grant (configured grant in which the Gi field indicates an active or inactive state). At this time, if the i^{th} configured grant is the type 2 configured grant, the activation or deactivation status of the configured grant may be reported to the base station by the Gi field. If the i^{th} configured grant is the type 1 configured grant, it may not be necessary to report the activation or deactivation status of the configured grant. Therefore, in the case of the Gi field corresponding to the type 1 configured grant, it is possible to set a value of 1 if the corresponding configured grant is set and 0 if not. In another embodiment, in the case of the Gi field corresponding to the type 1 configured grant, a preset value of 0 or 1 may be set. Alternatively, the UE may include an arbitrary value to cause the base station to ignore the corresponding field. In addition, if the i^{th} configured grant is not configured (if the configured grant indicated by the Gi field is not configured), the field may be set to a preset value of 0 or 1. Alternatively, the UE may include an arbitrary value to cause the base station to ignore the corresponding field.
- Among the type 2 configured grants having been configured, it may be the i^{th} configured grant (configured grant in which the Gi field indicates activation or deactivation) in ascending (or descending) order of the configured grant index. In this case, in the type 1 configured grant, the corresponding Gi field does not exist. If the i^{th} configured grant is not configured (if the configured grant indicated by the Gi field is not configured), the field may be set to a preset value of 0 or 1. Alternatively, the UE may include an arbitrary value to cause the base station to ignore the corresponding field.
- Among the type 2 configured grants having been configured in the cell to which the configured grant confirmation message is transmitted, it may be the i^{th} configured grant (configured grant in which the Gi field indicates activation or deactivation) in ascending (or descending) order of the configured grant index. In this case, in the type 1 configured grant, the corresponding Gi field does not exist. If the i^{th} configured grant is not configured (if the configured grant indicated by the Gi field is not configured), the field may be set to a preset value of 0 or 1. Alternatively, the UE may include an arbitrary value to cause the base station to ignore the corresponding field. The confirmation message for the set type 2 configured grant may be transmitted only in the cell in which the type 2 configured grant is configured.
- Among the type 2 configured grants having been configured in the BWP (Bandwidth Part) to which the configured grant confirmation message is transmitted, it may be the i^{th} configured grant (configured grant in which the Gi field indicates activation or deactivation) in ascending (or descending) order of the configured grant index. In this case, in the type 1 configured grant, the corresponding Gi field does not exist. If the i^{th} configured grant is not configured (if the configured grant indicated by the Gi field is not configured), the field may be set to a preset value of 0 or 1. Alternatively, the UE may include an arbitrary value to cause the base station to ignore the corresponding field. The confirmation message for the set type 2 configured grant may be transmitted only in the BWP in which the type 2 configured grant is configured.
- The configured grant with i as the configured grant index value may be the i^{th} configured grant (configured grant in which the Gi field indicates an active or inactive state). At this time, if the i^{th} configured grant is the type 2 configured grant, the activation or deactivation status of the configured grant may be reported to the base station by the Gi field. If the i^{th} configured grant is the type 1 configured grant, it may not be necessary to report the activation or deactivation status of the configured grant. Therefore, in the case of the Gi field corresponding to the type 1 configured grant, it is possible to set a value of 1 if the corresponding configured grant is configured and 0 if not. In another embodiment, in the case of the Gi field corresponding to the type 1 configured grant, a preset value of 0 or 1 may be set. Alternatively, the UE may include an arbitrary value to cause the base station to ignore the corresponding field. In addition, if the i^{th} configured grant is not configured (if the configured grant indicated by the Gi field is not configured), the field may be set to a preset value of 0 or 1. Alternatively, the UE may include an arbitrary value to cause the base station to ignore the corresponding field.
- In some embodiments, an index for the type 2 configured grant may be separately configured. If the index for the type 2 configured grant is called CGindex2, the Gi field may indicate activation or deactivation of the type 2 configured grant having CGindex2 as a value of i. In this case, in the type 1 configured grant, the corresponding Gi field does not exist. If the i^{th} configured grant is not configured (if the configured grant indicated by the Gi field is not configured), the field may be set to a preset value of 0 or 1. Alternatively, the UE may include an arbitrary value to cause the base station to ignore the corresponding field.
- Among the type 2 configured grants having been configured in the cell to which the configured grant confirmation message is transmitted, it may be the i^{th} configured grant (configured grant in which the Gi field indicates activation or deactivation) in ascending (or descending) order of the type 2 configured grant index (i.e., CGindex2). In this case, in the type 1 configured grant, the corresponding Gi field does not exist. If the i^{th} configured grant is not configured (if the configured grant indicated by the Gi field is not configured), the field may be set to a preset value of 0 or 1. Alternatively, the UE may include an arbitrary value to cause the base station to ignore the corresponding field. The confirmation message for the set type 2 configured grant may be transmitted only in the cell in which the type 2 configured grant is configured.
- Among the type 2 configured grants having been configured in the Bandwidth Part (BWP) to which the configured grant confirmation message is transmitted, it may be the i^{th} configured grant (configured grant in which the Gi field indicates activation or deactivation) in ascending (or descending) order of the type 2 configured grant index (i.e., CGindex2). In this case, in the type 1 configured grant, the corresponding Gi field does not exist. If the i^{th} configured grant is not configured (if the configured grant indicated by the Gi field is not configured), the field may be set to a preset value of 0 or 1. Alternatively, the UE may include an arbitrary value to cause the base station to ignore the corresponding field. The confirmation message for the set type 2 configured grant may be transmitted only in the BWP in which the type 2 configured grant is configured.

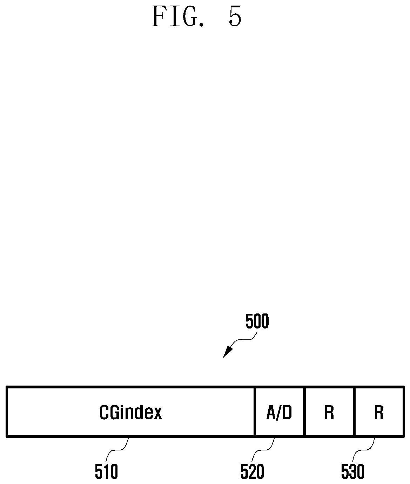

FIG. 5 illustrates a confirmation message format of the type 2 configured grant proposed by the disclosure. As described in FIG. 3, when the type 2 configured grant is activated or deactivated, the UE transmits a configured grant confirmation message to the base station to inform the base station whether the corresponding configured grant is activated or deactivated. If the number of type 2 configured grants configured in the UE and activated or deactivated is a large number, the configured grant confirmation message needs to include information on which Configured grant is activated or deactivated. In the embodiment of FIG. 5, the configured grant confirmation message having a medium access control (MAC) control element (CE) format is assumed, but there is no restriction on having any detailed format. The configured grant confirmation message 500 of the embodiment of FIG. 5 may have a configured grant index (CGindex) field 510 indicating the confirmation of activation or deactivation of the type 2 configured grant, an Activation/Deactivation (A/D) field 520 indicating the activation status or deactivation status of the configured grant, and a reserved field 530 that is not used. When the UE is indicated by the base station to activate or deactivate the type 2 configured grant, after performing such an indication of the base station, the UE transmits to the base station whether activation or deactivation of the configured grant is completed using the confirmation message of FIG. 5. At this time, including the configured grant index 510 of the type 2 configured grant that has completed the activation or deactivation that has been indicated, the UE can inform which configured grant is activated or deactivated. The configured grant confirmation message 500 may additionally include the A/D field 520 indicating whether the corresponding configured grant is activated or deactivated. However, when the configured grant index is included, the A/D field 520 does not necessarily need to be included, because it is possible to inform the base station of the completion of the command for which configured grant.

In some embodiments, the configured grant index may be uniquely configured in a cell group, uniquely configured within a cell, or uniquely configured within a BWP. If the configured grant index can be uniquely configured in the cell, the configured grant confirmation message of FIG. 5 may be a confirmation message indicating activation or deactivation of the configured grant configured in the transmitted cell. If the configured grant index can be uniquely configured in the BWP, the configured grant confirmation message of FIG. 5 may be a confirmation message indicating activation or deactivation of the configured grant configured in the transmitted BWP.

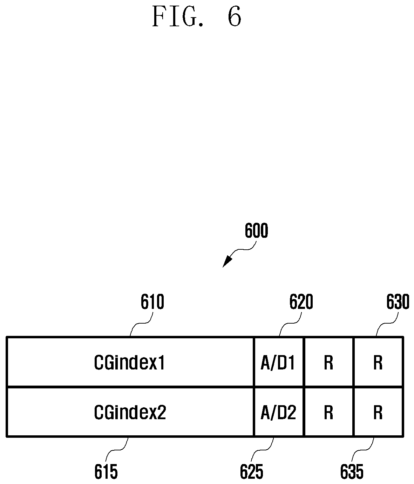

FIG. 6 illustrates a confirmation message format of the type 2 configured grant proposed by the disclosure. As described in FIG. 3, when the type 2 configured grant is activated or deactivated, the UE transmits a configured grant confirmation message to the base station to inform the base station whether the corresponding configured grant is activated or deactivated. If the number of type 2 configured grants configured in the UE and activated or deactivated is a large number, the configured grant confirmation message needs to include information on which configured grant is activated or deactivated. In addition, the configured grant confirmation message must be able to notify the activation or deactivation of multiple configured grants. In the embodiment of FIG. 6, the configured grant confirmation message having a medium access control (MAC) control element (CE) format is assumed, but there is no restriction on having any detailed format. The configured grant confirmation message 600 of the embodiment of FIG. 6 may have a configured grant index (CGindex) field 610 and 615 indicating the confirmation of activation or deactivation of the type 2 configured grant, activation/deactivation (A/D) fields 620 and 625 indicating the activation status or deactivation status of the configured grant, and reserved fields 630 and 635 that are not used. As illustrated in the embodiment of FIG. 6, the configured grant confirmation message may include a configured grant index and an A/D field for two or more configured grants. When the UE is indicated by the base station to activate or deactivate the type 2 configured grant, after performing such an indication of the base station, the UE transmits to the base station whether activation or deactivation of the configured grant is completed using the confirmation message of FIG. 6. At this time, including the configured grant index 610 and 615 of the type 2 configured grant that has completed the activation or deactivation that has been indicated, the UE can inform which configured grant is activated or deactivated. In addition, the configured grant confirmation message 600 may additionally include the A/D fields 620 and 625 indicating whether the corresponding configured grant has been activated or deactivated. However, when the configured grant index is included, the A/D fields 620 and 625 do not necessarily need to be included because it is possible to inform the base station of which indication for the configured grant has been completed. If activation or deactivation of multiple configured grants is indicated at the same time, or transmission of a confirmation message for more than one configured grant is pending, it may be notified that activation or deactivation application of several configured grants has been completed, including several configured grant indexes, as in the embodiment of FIG. 6. In the embodiment of FIG. 6, since it is possible to confirm activation or deactivation of multiple configured grants, the length of the configured grant confirmation message 600 of FIG. 6 may be variable, and if this message is in the form of a MAC CE, the corresponding MAC CE may be a MAC CE of a variable length.

In some embodiments, the configured grant index may be uniquely configured in a cell group, uniquely configured within a cell, or uniquely configured within a BWP. If the configured grant index can be uniquely configured in the cell, the configured grant confirmation message of FIG. 6 may be a confirmation message indicating activation or deactivation of the configured grant configured in the transmitted cell. If the configured grant index can be uniquely configured in the BWP, the configured grant confirmation message of FIG. 6 may be a confirmation message indicating activation or deactivation of the configured grant configured in the transmitted BWP.

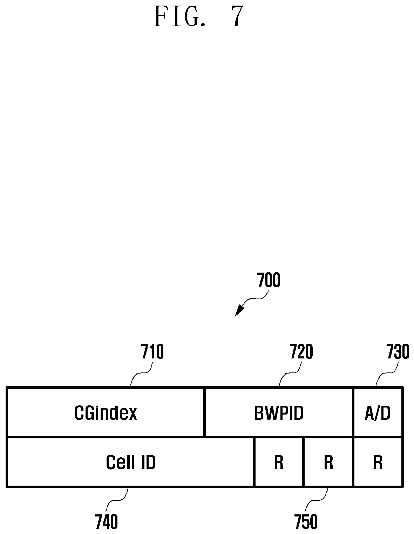

FIG. 7 illustrates a confirmation message format of the type 2 configured grant proposed by the disclosure. As described in FIG. 3, when the type 2 configured grant is activated or deactivated, the UE transmits a configured grant confirmation message to the base station to inform the base station whether the corresponding configured grant has been activated or deactivated. If the number of type 2 configured grants configured in the UE and activated or deactivated is a large number, the configured grant confirmation message needs to include information on which configured grant is activated or deactivated. In the embodiment of FIG. 7, the configured grant confirmation message having a medium access control (MAC) control element (CE) format is assumed, but there is no restriction on having any detailed format. The configured grant confirmation message 700 of the embodiment of FIG. 7 may have a configured grant index (CGindex) field 710 indicating which type 2 configured grant has been activated or deactivated, a bandwidth part identifier (BWPID) 720 indicating which BWP's configured grant has been activated or deactivated, an activation/deactivation (A/D) field 730 indicating the activation status or deactivation status of the corresponding configured grant, a cell ID 740 indicating which cell's configured grant has been activated or deactivated, and a reserved field 750 that is not used. The cell ID field 740 may be omitted if only the configured grant having been configured in the cell transmitting the configured grant confirmation message is available for the activated or deactivated configured grant reported in the configured grant confirmation message. The reserved field 750 is for the purpose of matching the byte length of the message, and thus may not be necessary depending on the length of the message.

When the UE is indicated by the base station to activate or deactivate the type 2 configured grant, after performing such an indication of the base station, the UE transmits to the base station whether activation or deactivation of the configured grant is completed using the confirmation message of FIG. 7. At this time, by transmitting the BWP ID 720 of the configured grant and the cell ID 740 of the configured grant, including the configured grant index 710 of the type 2 configured grant that has completed the activation or deactivation that has been indicated, the UE can inform whether the configured grant is activated or deactivated. The configured grant confirmation message 700 may additionally include the A/D field 730 indicating whether the corresponding configured grant has been activated or deactivated. However, when the configured grant index is included, the A/D field 730 does not necessarily need to be included because it is possible to inform the base station of whether the command for the configured grant has been completed. If activation or deactivation of multiple configured grants is indicated at the same time, or transmission of a confirmation message for more than one configured grant is pending, by transmitting a plurality of configured grant indexes, BWP IDs, and cell IDs illustrated in the embodiment of FIG. 7, it is possible to notify that activation or deactivation application for several configured grants has been completed. If multiple configured grants are reported to be activated or deactivated, the length of the configured grant confirmation message 700 of FIG. 7 may be variable, and if this message is in the form of a MAC CE, the corresponding MAC CE may be a MAC CE of a variable length.

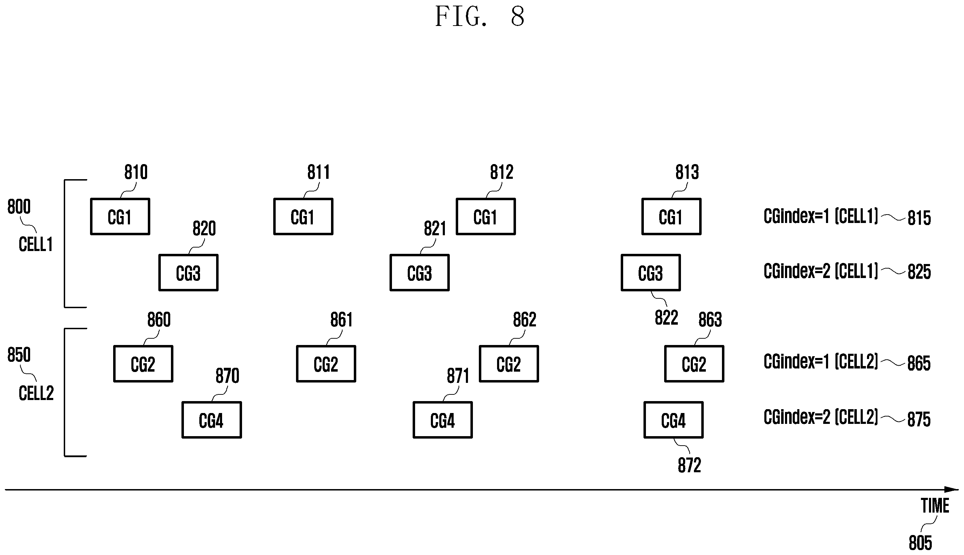

FIG. 8 illustrates a method of configuring a configured grant index for each cell. The configured grant index for identifying the configured grant may be uniquely configured in the cell. In this case, configured grants configured in different cells may have the same configured grant index value. However, these configured grants may be identified by cell ID. In the embodiment of Figure 8, it is assumed that the UE is configured with two cells 800 and 850, and a total of four configured grants are configured for CG1 810, 811, 812, 813, CG2 860, 861, 862, 863, CG3 820, 821, 822, and CG4 870, 871, 872. Among them, CG1 and CG3 are configured grants having been configured in cell 1 800, and the CG2 and CG4 are configured in cell 2 850. In addition, for CG1, the configured grant index 1 is configured in cell 1 815, and for CG2, the configured grant index 1 is configured in cell 2 (865). However, since these are configured in different cells, each configured grant may be identified with the same configured grant index when used together with the cell ID. For CG2, a configured grant index 2 is configured in cell 1 (825), and for CG4, a configured grant index 2 is configured in cell 2. Since these are also configured in different cells, each configured grant may be identified with the same configured grant index when used together with the cell ID. At this time, when transmitting the configured grant confirmation message, the cell ID or BWPID is transmitted together with the configured grant index to indicate which configured grant to confirm activation or deactivation application, or the configured grant confirmation message may include only activation or deactivation information of the configured grant configured in the cell or BWP to which the confirmation message is transmitted.

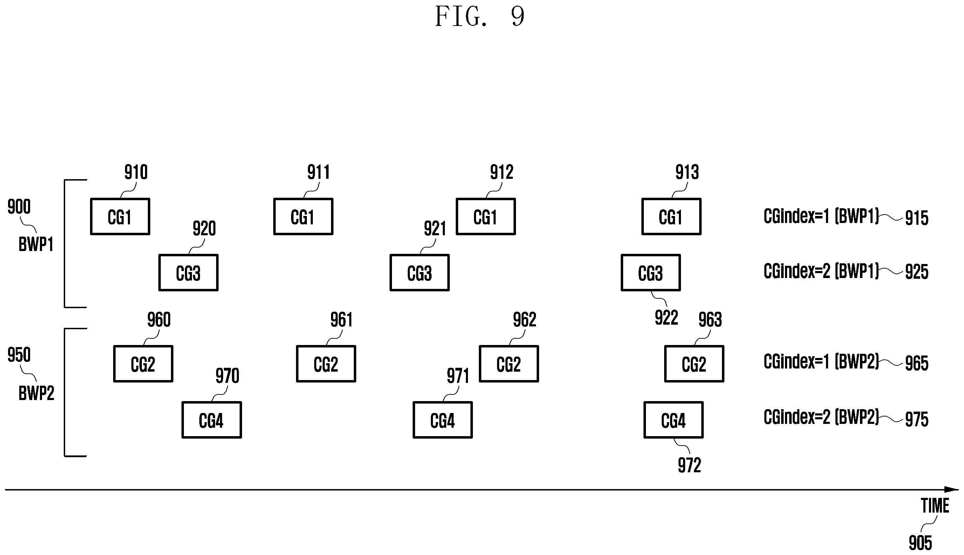

FIG. 9 illustrates a method of configuring a configured grant index for each BWP. The configured grant index for identifying the configured grant may be uniquely configured within the Bandwidth Part (BWP). In this case, the configured grants having been configured in different BWPs may have the same configured grant index value. However, these configured grants may be identified by BWP ID. In the embodiment of FIG. 9, it is assumed that the UE is configured with two BWPs 900 and 950, and is configured with a total of four configured grants: CG1 910, 911, 912, 913, CG2 960, 961, 962, 963, CG3 920, 921, 922, and CG4 970, 971, 972. Among them, CG1 and CG3 are configured grants configured in BWP1 (900), and CG2 and CG4 are configured in BWP2 950. In addition, for CG1, the configured grant index 1 is configured in BWP1 (915), and for CG2, the configured grant index 1 is configured in BWP2 (965). However, since these are configured in different BWPs, each configured grant can be identified with the same configured grant index when used together with the cell ID and BWP ID. For CG2, BWP1 has set configured grant Index 2 (925), and CG4 has set BWP2 with configured grant Index 2. Since these are also configured in different BWPs, each configured grant can be identified with the same configured grant index when used together with the cell ID and BWP ID. At this time, when sending the configured grant confirmation message, the cell ID and BWP ID are transmitted together with the configured grant index to indicate which configured grant is to be activated or deactivated, or the configured grant confirmation message may include only activation or deactivation information of the configured grant having been configured in the cell or BWP to which the confirmation message is transmitted.

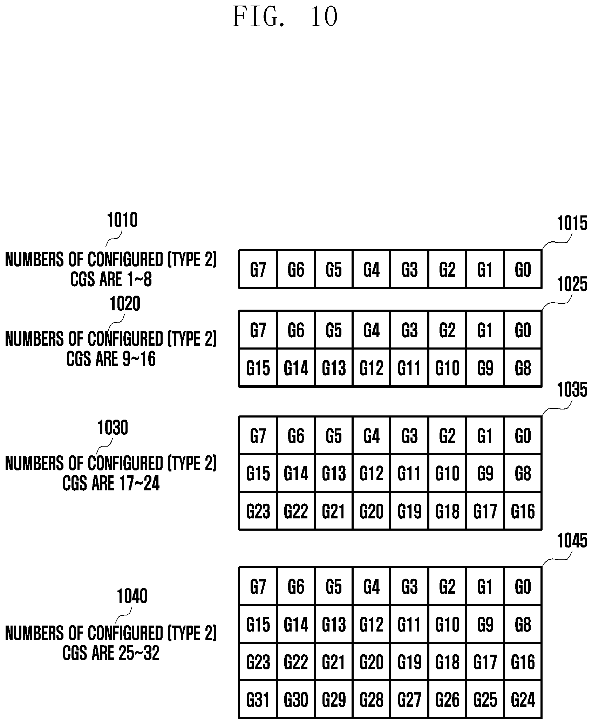

FIG. 10 illustrates a method of applying a variable format of a configured grant confirmation message. In the embodiment of FIG. 4, it is shown that each type 2 configured grant has a Gi field indicating activation or deactivation of the type 2 configured grant (400). In this case, when the number of type 2 configured grants having been configured is variable, the size of the configured grant confirmation message may vary. Since each type 2 configured grant can report to the base station sufficiently if it has 1 bit of activation or deactivation confirmation bit, If the number of configured second format configured grants is 1 to 8 (1010), a 1-byte configured grant confirmation message format 1015 can be used. At this time, the Gi field for the configured grant that has not been configured may be indicated as an arbitrary value by the UE or as a preset value. In addition, when the number of the type 2 configured grants having been configured is 9 or more and 16 or less (1020), a 2-byte configured grant confirmation message format (1025) may be used. Similarly, when the number of the type 2 configured grants having been configured is 17 or more and 24 or less (1030), a 3-byte configured grant confirmation message format (1035) can be used. When the number of the type 2 configured grants having been configured is 25 or more and 32 or less (1040), a 4-byte configured grant confirmation message format (1045) can be used. The size of the configured grant confirmation message can be used differently according to the number of the type 2 configured grants configured in this way. If this message uses the MAC CE format, this MAC CE can be a variable length MAC CE. However, according to an embodiment, it may be a fixed-length MAC CE whose length is distinguished by a logical channel identifier (LCID).

The above description describes the application of the configured grant confirmation message format of a different length according to the number of the type 2 configured grants having been configured. However, When the Gi field indicates activation and deactivation of the i^{th} configured grant, the size of the configured grant confirmation message may vary according to the number of the configured grants having been configured regardless of the type of the configured grant. If the number of the configured grants is from 1 to 8 (1010), a 1-byte configured grant confirmation message format (1015) can be used. At this time, the Gi field for the configured grant that has not been configured may be indicated by the UE as an arbitrary value or as a preset value. In addition, when the number of configured grants is 9 or more and 16 or less (1020), a 2-byte configured grant confirmation message format (1025) can be used. Similarly, when the number of configured grants is 17 or more and 24 or less (1030), a 3-byte configured grant confirmation message format (1035) can be used. If the number of configured grants is 25 or more and 32 or less (1040), the 4-byte configured grant confirmation message format (1045) can be used. Depending on the number of configured grants configured in this way, the size of the configured grant confirmation message can be used differently. If this message uses the MAC CE format, this MAC CE can be a variable length MAC CE. However, according to an embodiment, it may be a fixed-length MAC CE whose length is identified by a logical channel identifier (LCID).

In some embodiments, the Gi field may be used as a bit indicating that the configuration of the base station has been applied to the type 2 configured grant instructed by the base station to activate or deactivate. At this time, the Gi field having a value of 1 may indicate that activation or deactivation of the type 2 configured grant has been applied, and the Gi field having a value of 0 may indicate that activation or deactivation of the type 2 configured grant has not been applied. In this case, the size of the configured grant confirmation message may also be differently applied according to the number of the configured grants having been configured or the number of the type 2 configured grants having been configured.

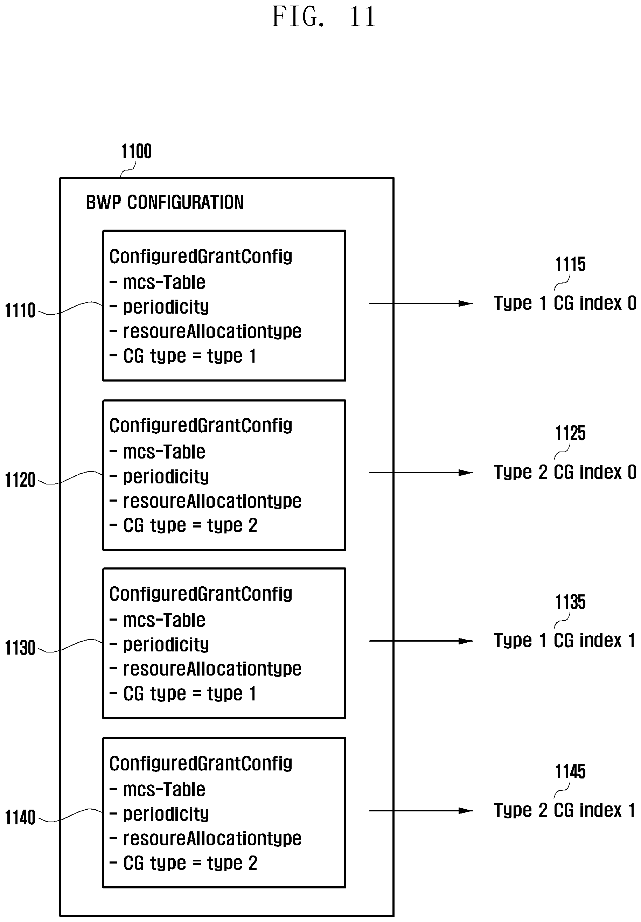

FIG. 11 illustrates a method of assigning a type 1 configured grant index and a type 2 configured grant index. In the embodiment of FIG. 11, it is characterized that a configured grant index is assigned for each type of configured grant. At the time of each BWP configuration (1100) of the UE or when the cell is configured, the base station may configure a configured grant to the BWP or cell. The configuration of such a configured grant may be included in the configured grant Config and transmitted (1110, 1120, 1130, 1140). Each configured grant config may include information such as an MCS table to be used, a periodicity, a radio resource to be used, and a format of the configured grant (whether the type 1 or the type 2), or the like. At this time, the type 1 configured grant to be configured may have an index of the type 1 configured grant (type 1 CG index), and the type 2 configured grant may have an index of the type 2 configured grant (type 2 CG Index). In the embodiment of FIG. 11, a total of four configured grants have been configured (1110, 1120, 1130, 1140). Among them, the first configured grant (1110) and the third configured grant (1130) are the type 1 configured grant, and the second configured grant (1120) and the fourth configured grant (1140) are type 2 configured grants. At this time, the configured grant index of each format may have values in the order in which the type of configured grant is configured. In the embodiment of FIG. 11, the type 1 configured grant configured first (1110) is given a type 1 configured grant index 1115 of 0, which is a starting value. In addition, the second configured type 1 configured grant 1130 is given a type 1 configured grant index 1135 of 1, which is the next value. In addition, the type 2 configured grant configured first (1120) is given a type 2 configured grant index 1125 of 0, which is a starting value. In addition, the second configured type 2 configured grant 1140 is given a type 2 configured grant index 1145 of 1, which is the next value.

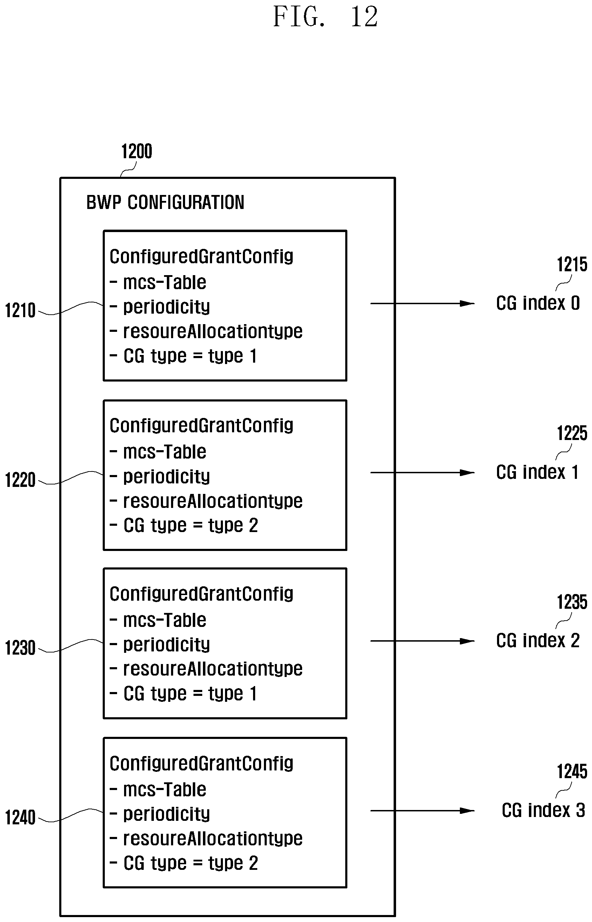

FIG. 12 illustrates a method of assigning a configured grant index. In the embodiment of FIG. 12, a configured grant index is assigned regardless of the type of each configured grant. At the time of each BWP configuration 1200 of the UE or at the time of cell configuration, the base station may configure the configured grant for the BWP or the cell. The configuration of such a configured grant may be included in the configured grant Config and transmitted (1210, 1220, 1230, 1240). Each configured grant Config may include information such as an MCS table to be used, a periodicity, a radio resource to be used, and a format of the configured grant (whether the type 1 or the type 2). At this time, the type 1 or the type 2 configured grant to be configured may have a configured grant (CG) index. In the embodiment of FIG. 12, a total of four configured grants are configured (1210, 1220, 1230, 1240). Among them, the configured grant (CG) having been configured first (1210) and the configured grant having been configured third (1230) are type 1 configured grants, and the configured grant having been configured second 1220 and the configured grant having been configured fourth 1240 are type 2 configured grants. At this time, the configured grant index may have values in the order in which the configured grant is configured. In the embodiment of FIG. 12, the configured grant having been configured first (1210) is given a configured grant index (1215) of 0, which is a starting value. In addition, the configured grant having been configured second (1220) is given a configured grant index (1225) of 1, which is the next value. And, the configured grant having been configured third (1230) is assigned a configured grant index (1235) of 2. In addition, the configured grant having been configured fourth (1240) is given the next value, the configured grant index (1245) of 3.

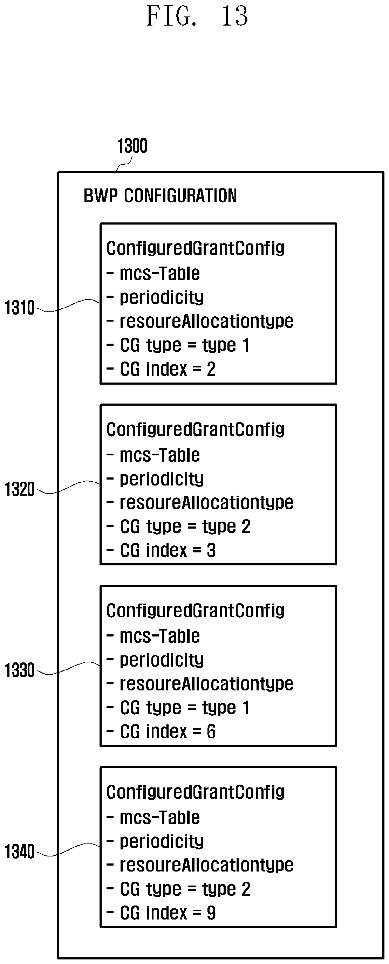

FIG. 13 illustrates a method of assigning a configured grant index. In the embodiment of FIG. 13, the base station assigns a configured grant index value to each configured grant. At the time of each BWP configuration (1300) of the UE or when the cell is configured, the base station may configure a configured grant for the BWP or cell. The configuration of such a configured grant may be included in the Configured grant Config and transmitted (1310, 1320, 1330, 1340). Each configured grant Config may include information such as an MCS table to be used, a periodicity, a radio resource to be used, and a format of the configured grant (whether the type 1 or the type 2). In addition, the type 1 configured grant or the type 2 configured grant may set the index of the configured grant (CG Index). Such a configured grant index may be set by a base station to a specific value. In the embodiment of FIG. 13, a total of four configured grants are configured (1310, 1320, 1330, 1340). Among them, the configured grant having been configured first (1310) and the configured grant having been configured third (1330) are type 1 configured grants, and the configured grant having been configured second (1320) and the configured grant having been configured fourth (1340) are the type 2 configured grants. In the embodiment of FIG. 13, the configured grant having been configured first (1310) is assigned a configured grant index of 2. And the configured grant having been configured second (1320) is assigned a configured grant index of 3. And the configured grant having been configured third (1330) is assigned a configured grant index of 6. And the configured grant having been configured fourth (1340) is given a configured grant index of 9. In some embodiments, each configured grant type (type 1, type 2) may have a respective configured grant index.

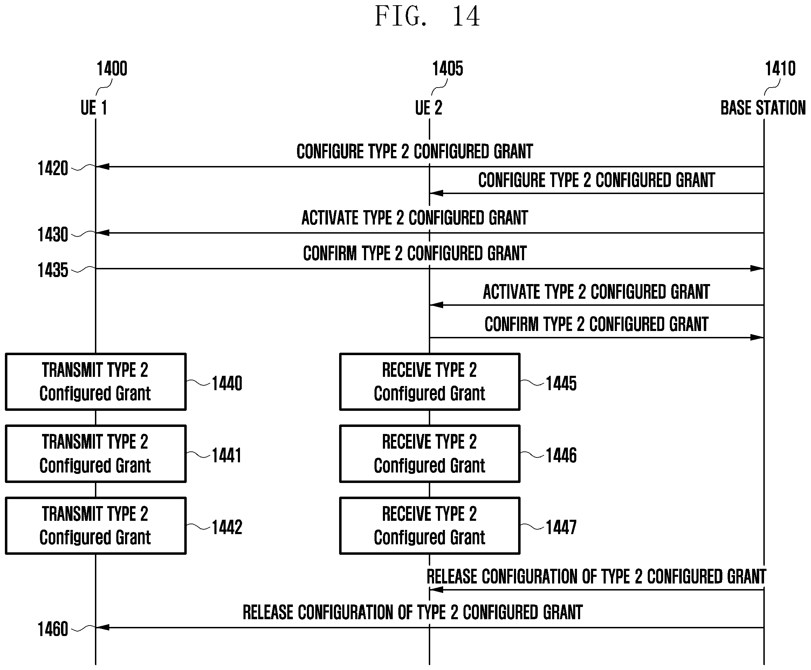

FIG. 14 illustrates a procedure for configuring and activating a type 2 configured grant in a sidelink for direct communication between UEs. In sidelink communication, a link for direct communication is established between two UEs of the first UE 1400 and the second UE 1405, and wireless communication is performed. In the embodiment of FIG. 14, the base station indicates the UE to activate the type 2 configured grant and reports that the UE has performed the activation of the second configured grant to the base station as a confirmation message. To this end, a type 2 configured grant may be configured from the base station 1410. The embodiment of FIG. 14 illustrates that a type 2 configured grant is configured for communication between the first UE 1400 and the second UE 1405. Since the type 2 configured grant has an activation procedure, only some configuration information necessary for resource use may be included in the setting message 1420. The information included here may include frequency hopping configuration to be used for the type 2 configured grant, demodulation reference signal (DMRS) configuration, modulation and coding scheme (MCS) tables to be used, resource allocation type, whether a power control loop is used, whether transmission is repeated, a periodicity, a value of a configured grant timer, and the like. In addition, a configured grant index, which is an identifier capable of identifying the set type 2 configured grant, may be included. The configured grant index can be used together with the type 1 configured grant and the type 2 configured grant. Such a configured grant index may be uniquely configured in a cell group, uniquely configured in a cell, or uniquely configured in a BWP. Such information may be included in the configured grant Config in the RRC message. The configuration message of the type 2 configured grant may be transmitted by the base station 1410 to both the first UE 1400 and the second UE 1405 (1420). Even if the type 2 configured grant is configured, the corresponding resource is not actually allocated until an activation instruction from the base station is given. After the type 2 configured grant is configured (1420), the base station may activate the type 2 configured grant by transmitting a type 2 configured grant activation message to the UE (1430). Information that may be included in this activation message may include antenna port to be used for the type 2 configured grant, MCG index, frequency hopping offset, time domain offset, a time domain allocation. After activating the type 2 configured grant that has been indicated to activate, the first UE and the second UE may transmit a type 2 configured grant confirmation message to the base station to inform the base station that the activation has been completed (1435). After activation, the first UE, which is the transmitting UE, may transmit data using the radio resource specified at the specified time (1440, 1441, 1442), and the second UE, which is a receiving UE, may receive data using a specified radio resource at a specified time (1445, 1446, 1447). In FIG. 14, it is assumed that the resource of the type 2 configured grant may be transmitted and received three times periodically, but it means that one resource is allocated at every configured cycle. If there is no data to be transmitted in the configured grant allocated by the UE, the transmitting UE may perform a skipping operation that does not use the configured grant and does not transmit. The base station 1410 may indicate the UE to deactivate the type 2 configured grant when transmission using the type 2 configured grant is not required, and the UE may transmit a type 2 configured grant confirmation message to the base station to inform that the indicated deactivation is complete after deactivating the type 2 configured grant. In addition, at a time when it is determined that the type 2 configured grant setting is no longer required, the base station may release the type 2 configured grant configuration by sending a type 2 configured grant release message 1460 to the UE.

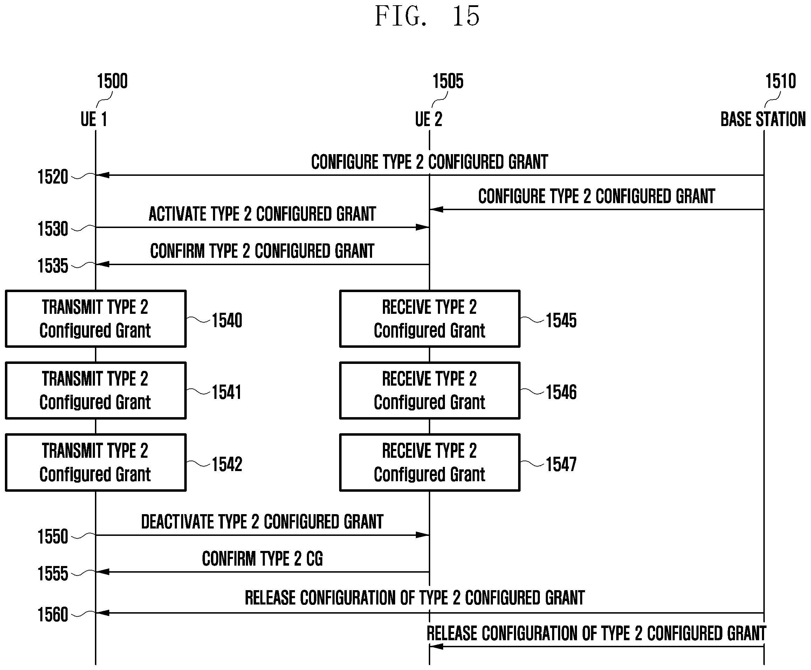

FIG. 15 illustrates a procedure for configuring and activating a type 2 configured grant in a sidelink for direct communication between UEs. In the sidelink communication, a link for direct communication is established between two UEs of the first UE 1500 and the second UE 1505, and wireless communication is performed. In the embodiment of FIG. 15, it is characterized in that the first UE indicates the second UE to activate the type 2 configured grant after the type 2 configured grant is configured, and the second UE reports that the second UE has performed the activation of the second configured grant as a confirmation message to the first UE. To this end, a type 2 configured grant may be configured from the base station 1510. The embodiment of FIG. 15 illustrates that a type 2 configured grant is configured for communication between the first UE 1500 and the second UE 1505. Since the type 2 configured grant has an activation procedure, only some pieces of configuration information necessary for resource use may be included in the configuration message 1520. The information included here may include frequency hopping configuration to be used for the type 2 configured grant, demodulation reference signal (DMRS) configuration, modulation and coding scheme (MCS) table to be used, resource allocation type, whether a power control loop is used, whether or not a repetition is transmitted, a periodicity, a value of a configured grant timer, and the like. In addition, a configured grant index, which is an identifier capable of identifying the set type 2 configured grant, may be included. The configured grant index may be used together with the type 1 configured grant and the type 2 configured grant. Such a configured grant index may be uniquely configured in a cell group, uniquely configured in a cell, or uniquely configured in a BWP. Such information may be included in the configured grant Config in the RRC message. The configuration message of the type 2 configured grant may be transmitted by the base station 1510 to both the first UE 1500 and the second UE 1505 (1520). Even if the type 2 configured grant is configured, the corresponding resource is not actually allocated until an activation indication from the base station is given. After the type 2 configured grant is configured (1520), the first UE may activate the type 2 configured grant by transmitting a type 2 configured grant activation message to the second UE (1530). The UE that transmits the type 2 configured grant activation message may be a transmitting UE. Information that can be included in this activation message may include an antenna port to be used for the type 2 configured grant, an MCG index, a frequency hopping offset, a time domain offset, a time domain resource location, and the like. After activating the type 2 configured grant receiving the activation indication, the second UE may transmit a type 2 configured grant confirmation message to the first UE to inform the base station that the activation has been completed (1535). After activation, the first UE, which is the transmitting UE, can transmit data using the specified radio resource at the specified time (1540, 1541, 1542), and the second UE, which is a receiving UE, may receive data using a specified radio resource at a specified time (1545, 1546, 1547). In FIG. 15, it is assumed that the resource of the type 2 configured grant can be transmitted and received three times periodically, but it means that one resource is allocated at every configured cycle. If there is no data to be transmitted in the configured grant assigned by the transmitting UE, the transmitting UE may perform a skipping operation that does not use the configured grant and does not transmit. The first UE (1500) may indicate the second UE to deactivate the type 2 configured grant when transmission using the type configured grant confirmation message to the first UE to notify that the indicated deactivation has been completed (1555) after deactivating the type 2 configured grant. In addition, when it is determined that the type 2 configured grant setting is no longer necessary, the base station may release the type 2 configured grant configuration by sending a type 2 configured grant release message 1560 to the UE.

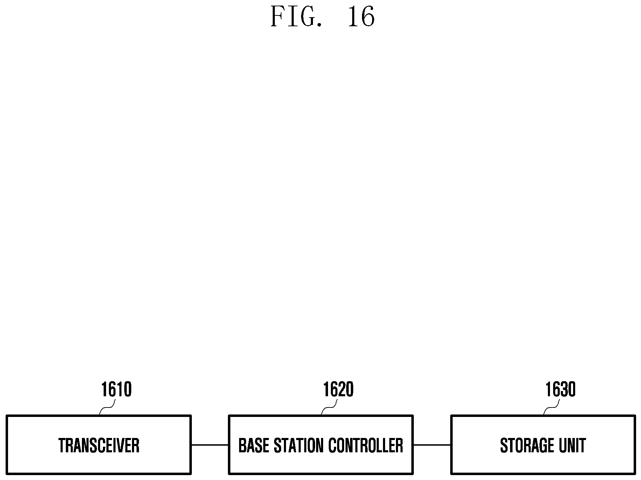

The following is related to a claimed embodiment. FIG. 16 is a diagram showing the structure of a base station according to an embodiment of the disclosure.

Referring to FIG. 16, the base station may include a transceiver 1610, a controller 1620, and a storage unit 1630. In the disclosure, the controller 1620 may be defined as a circuit or an application-specific integrated circuit or at least one processor.

The transceiver 1610 may transmit and receive signals with other network entities. The transceiver 1610 may transmit system information to the UE, for example, and may transmit a synchronization signal or a reference signal.

The controller 1620 may control the overall operation of the base station according to the embodiment proposed in the disclosure. For example, the controller 1620 may control a signal flow between blocks to perform an operation according to the above-described flowchart. For example, the controller 1620 controls to receive an RRC message including setting information for a plurality of type 2 configured grants, receive a control message for activating at least one type 2 configured grant among the plurality of type 2 configured grants, and transmit a confirmation message for confirming an activated configured grant among the plurality of type 2 configured grants to the base station, based on the control message.

The storage unit 1630 may store at least one of information transmitted and received through the transceiver 1610 and information generated through the controller 1620.

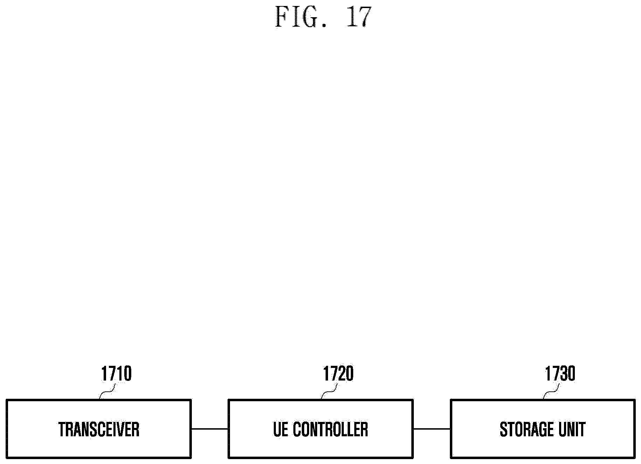

FIG. 17 is a view illustrating a configuration of a user equipment (UE) according to an embodiment of the disclosure.

Referring to FIG. 17, the UE may include a transceiver 1710, a controller 1720, and a storage unit 1730. The controller in the disclosure may be defined as a circuit or an application-specific integrated circuit or at least one processor.

The transceiver 1710 may transmit and receive a signal with other network entities. For example, the transceiver 1710 may receive system information from a base station, and receive a synchronization signal or a reference signal.

The controller 1720 controls the overall operation of the UE according to the embodiment proposed in the disclosure. For example, the controller 1720 controls a signal flow between blocks to perform an operation according to the above-described flowchart. The controller 1720 transmits an RRC message including setting information for a plurality of type 2 configured grants, transmit a control message for activating at least one type 2 configured grant among the plurality of type 2 configured grants, and control to receive a confirmation message for confirming an activated configured grant among the plurality of type 2 configured grants from the UE, based on the control message.

The storage unit 1730 may store at least one of information transmitted and received through the transceiver 1710 and information generated through the controller 1720.

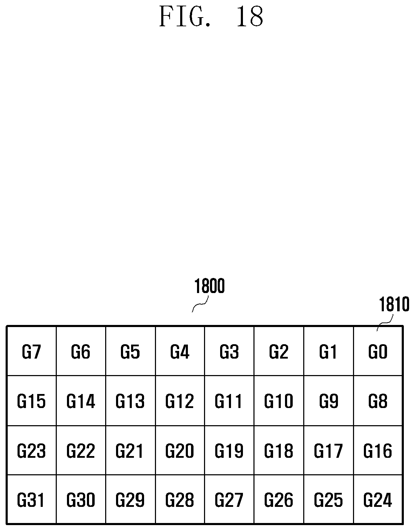

The following paragraphs describe embodiments, aspects and examples that are not specifically claimed but may be useful for understanding the invention. FIG. 18 illustrates a confirmation message type of the type 2 configured grant proposed by the disclosure. As described with reference to FIG. 3, when the type 2 configured grant is activated or deactivated, the UE should transmit the configured grant confirmation message to the base station to inform whether the corresponding configured grant is activated or deactivated. If the number of the type 2 configured grants configured in the UE and activated or deactivated is a large number, the configured grant confirmation message needs to include information on which configured grant is activated or deactivated. In the embodiment of FIG. 18, a configured grant confirmation message having a medium access control (MAC) control element (CE) format is assumed, but there is no restriction on having a specific detailed format. The configured grant confirmation message 1800 of the embodiment of FIG. 18 may include a Gi field (i=0, 1, ..., 31) 1810 indicating a bit indicating an activation state of a set configured grant. In the embodiment of FIG. 18, it is assumed that there are 32 Gi fields, but this is only an embodiment and the number of Gi fields may vary.

The Gi field 410 is a field indicating activation or deactivation of the i^{th} configured grant by a 1-bit indicator. For example, if the value of the Gi field 1810 has a value of 1, it indicates that the corresponding configured grant is activated, and if it has a value of 0, it may indicate that the corresponding configured grant has been deactivated.

In another embodiment, the Gi field may be used as a bit indicating that the configuration of the base station has been applied to the type 2 configured grant indicated by the base station to activate or deactivate. In this case, having a value of 1 in the Gi field may be confirmation indicating that activation or deactivation of the type 2 configured grant has been applied. Further, the Gi field having a value of 0 may indicate that activation or deactivation of the type 2 configured grant has not been applied.

In this case, the method of configuring the i^{th} configured grant may be one of the following methods.
- The configured grant having i as the Configured grant index value may be the i^{th} Configured grant (configured grant in which the Gi field indicates an activated or deactivated state). In this case, if the i^{th} configured grant is the type 2 configured grant, the activation or deactivation status of the configured grant may be reported to the base station by the Gi field. If the i^{th} configured grant is a type 1 configured grant, it may not be necessary to report the activation or deactivation status of the Configured grant. Therefore, in the case of the Gi field corresponding to the type 1 configured grant, if the configured grant is configured, a value of 1 may be set, or if not set, a value of 0 may be set. In another embodiment, in the case of the Gi field corresponding to the type 1 configured grant, if the type 1 configured grant is configured, it may have a value of 1, and if not set, it may have a value of 0. Alternatively, the UE may include an arbitrary value to cause the base station to ignore the corresponding field.
- It may be the i^{th} configured grant (configured grant in which the Gi field indicates activation or deactivation) in ascending (or descending) order of the configured grant index among the type 2 configured grant having been configured. At this time, the type 2 configured grant can only indicate activation and deactivation of the configured grant configured in the active BWP (bandwidth part). In this case, the Gi field corresponding to the type 1 configured grant and the type 2 configured grant configured in the BWP other than the active BWP may not exist. In addition, if the i^{th} configured grant is not configured (if the configured grant indicated by the Gi field is not configured), the field may be set to a value of 0 or 1 previously set. Alternatively, the UE may include an arbitrary value to cause the base station to ignore the corresponding field.
- It may be the i^{th} configured grant (configured grant with the Gi field indicating activation or deactivation) in ascending (or descending) order of the configured grant index regardless of the type (regardless of whether the type 1 or the type 2) among the configured grants having been configured. At this time, the configured grant can only indicate activation and deactivation of the configured grant configured in the active BWP (bandwidth part). In this case, the Gi field corresponding to the type 2 configured grant configured in the BWP other than the Active BWP may not exist. Also, if the i^{th} configured grant is not configured (if the configured grant indicated by the Gi field is not configured), the field may be set to a value of 0 or 1 previously configured. Alternatively, the UE may include an arbitrary value to cause the base station to ignore the corresponding field.
- The configured grant with i as the configured grant index value can be the i^{th} configured grant (configured grant in which the Gi field indicates an activated or deactivated state). At this time, if the i^{th} configured grant is the type 2 configured grant, the activation or deactivation status of the configured grant may be reported to the base station by the Gi field. If the i^{th} configured grant is a type 1 configured grant, it may not be necessary to report the activation or deactivation status of the configured grant. Therefore, in the case of the Gi field corresponding to the type 1 configured grant, a value of 1 may be set if the corresponding configured grant is configured, or a value of 0 may be set if not configured. In another embodiment, in the case of a Gi field corresponding to the type 1 configured grant, a preset value of 0 or 1 may be set. Alternatively, the UE may include an arbitrary value to cause the base station to ignore the corresponding field. In addition, if the i^{th} configured grant is not configured (if the configured grant indicated by the Gi field is not configured), the field may set a value of 0 or 1 previously set. Alternatively, the UE may include an arbitrary value to cause the base station to ignore the corresponding field.
- When the configured grant index is configured to be unique only within the BWP, it may be the i^{th} configured grant (configured grant with a Gi field indicating activation or deactivation) in ascending (or descending) order of the Cell ID and the configured grant index among the type 2 configured grant having been configured in the active BWP. At this time, the type 2 configured grant can only indicate activation and deactivation of the configured grant having been configured in the active BWP (bandwidth part). In this case, the Gi field corresponding to the type 1 configured grant and the type 2 configured grant having been configured in the BWP other than the Active BWP may not exist. In addition, if the i^{th} configured grant is not configured (if the configured grant indicated by the Gi field is not configured), the field may be set to a value of 0 or 1 previously configured. Alternatively, the UE may include an arbitrary value to cause the base station to ignore the corresponding field.
- If the configured grant index is uniquely configured within the BWP, it may be the i^{th} configured grant (configured grant with a Gi field indicating activation or deactivation) in ascending (or descending) order of the Cell ID and the configured grant index among the configured grants having been configured in the active BWP, regardless of the type of configured grant having been configured in the active BWP (regardless whether the type 1 or the type 2). At this time, the configured grant can only indicate activation and deactivation of the configured grant having been configured in the active BWP (bandwidth part). In this case, the Gi field corresponding to the type 2 configured grant having been configured in the BWP other than the Active BWP may not exist. Further, if the i^{th} configured grant is not configured (if the configured grant indicated by the Gi field is not configured), the field may be set to a value of 0 or 1 previously set. Alternatively, the UE may include an arbitrary value for the field and cause the base station to ignore the corresponding field.
- When the configured grant index is configured to be unique only within the cell, it may be the i^{th} configured grant (configured grant with a Gi field indicating activation or deactivation) in ascending (or descending) order of the Cell ID and the configured grant index among the type 2 configured grant having been configured in the active BWP. At this time, the type 2 configured grant can only indicate activation and deactivation of the configured grant having been configured in the active BWP (bandwidth part). In this case, the Gi field corresponding to the type 1 configured grant and the type 2 Configured grant having been configured in the BWP other than the Active BWP may not exist. In addition, if the i^{th} configured grant is not configured (if the configured grant indicated by the Gi field is not configured), the field may be set to a value of 0 or 1 previously set. Alternatively, the UE may include an arbitrary value for the field and cause the base station to ignore the corresponding field.
- If the configured grant index is uniquely configured within a cell, it may be the i^{th} configured grant (configured grant with the Gi field indicating activation or deactivation) in ascending (or descending) order of the Cell ID and the configured grant index regardless of the type of configured grant having been configured in the active BWP (regardless whether the type 1 or the type 2). At this time, the configured grant can only indicate activation and deactivation of the configured grant having been configured in the active BWP (Bandwidth Part). In this case, the Gi field corresponding to the type 2 configured grant having been configured in the BWP other than the Active BWP may not exist. In addition, if the i^{th} configured grant is not configured (if the configured grant indicated by the Gi field is not configured), the field may be set to a value of 0 or 1 previously set. Alternatively, the UE may include an arbitrary value for the field and cause the base station to ignore the corresponding field.

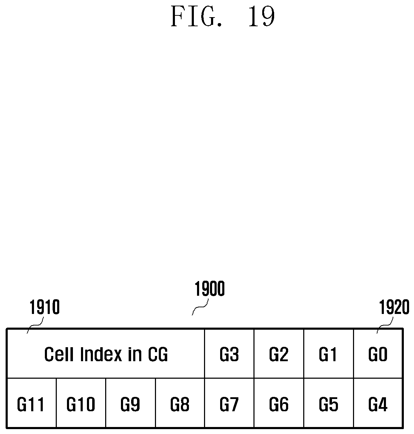

FIG. 19 illustrates a confirmation message type of the type 2 configured grant proposed by the disclosure. As described with reference to FIG. 3, when the type 2 configured grant is activated or deactivated, the UE should transmit the configured grant confirmation message to the base station to inform whether the corresponding configured grant is activated or deactivated. If the number of the type 2 configured grants configured in the UE and activated or deactivated is a large number, the configured grant confirmation message needs to include information on which configured grant is activated or deactivated. In addition, the UE should be able to inform the activation or deactivation of several configured grants. In the embodiment of FIG. 19, a configured grant confirmation message having a medium access control (MAC) control element (CE) format is assumed, but a specific detailed format of the confirmation message is not limited. The configured grant confirmation message 1900 of the embodiment of FIG. 19 may include a Cell Index in Cell Group (CG) field (1910) indicating activation or deactivation of a configured grant having been configured in a certain cell, and a Gi field (1920) indicating whether to confirm activation or deactivation of a specific configured grant. When the UE is indicated by the base station to activate or deactivate the type 2 configured grant, the UE transmits to the base station whether the activation or deactivation of the configured grant is completed using the confirmation message of FIG. 19 after performing such an indication from the base station. In the embodiment of FIG. 19, it is assumed that there are 12 Gi fields, but the number of Gi fields may vary according to embodiments. In the embodiment of FIG. 19, having 12 Gi fields may mean that an active BWP configured in a corresponding cell may have a maximum of 12 configured grants.

The Gi field 1920 is a field indicating activation or deactivation of the i^{th} configured grant by a 1-bit indicator. For example, if the value of the Gi field 1920 has a value of 1, it indicates that the corresponding configured grant is activated, and if it has a value of 0, it may indicate that the corresponding configured grant has been deactivated.

When the configured grant index is uniquely configured in the BWP, the activation and deactivation states of the configured grant having an i value of the configured grant index may appear in the Gi field. In some embodiments, when the configured grant is a type 1 configured grant, it may have a value of 1 when it is configured and a value of 0 when it is not configured. For the type 2 configured grant, it may have a value of 1 when the corresponding configured grant is not configured.

If the configured grant index is uniquely configured in the cell or in the Cell Group, the i^{th} configured grant, which means in the Gi field, may be configured in ascending order of the configured grant index for the configured grant having been configured in the active BWP. In another embodiment, the i^{th} configured grant meaning in the Gi field may be configured in ascending order of the configured grant index for the type 2 configured grant having been configured in the active BWP. In some embodiments, when the configured grant is a type 1 configured grant, it may have a value of 1 when it is configured and a value of 0 when it is not configured. For the type 2 configured grant, it may have a value of 1 when the corresponding configured grant is not configured.

In the 5G communication system, the cell ID 740 has a value of 5 bits and can classify up to 32 cells, and such a cell ID can be unique in UE configuration. However, since the configured grant confirmation message is configured within a cell group, a unique cell ID may not be required in UE configuration. However, if a maximum of 12 Gi fields are included in the configured grant confirmation message as in the embodiment illustrated in FIG. 19, when a 5-bit cell ID is included, it is at least 17 bits, and a confirmation message size of 3 bytes (24 bits) is required. This can be a factor that increases overhead by generating unnecessary reserved bits.

To solve this problem, the embodiment of FIG. 19 includes a cell index in cell group (CG) field 1910. This is a value converted to a 4-bit index that makes the cell ID unique within the cell group. This value may be set in ascending order of cell ID among cells configured in the corresponding cell group. For example, if the cell ID of a cell configured in master cell group (MCG) is 0, 1, and 5, in the cell index in cell group corresponding to the MCG, a cell having a cell ID of 0 has a value of 0, a cell having a cell ID of 1 has a value of 1, and a cell having a cell ID of 5 has a value of 2. In this case, if the maximum number of cells that can be configured in a cell group is 16, all cells can be represented by a 4-bit cell index in cell group.

In some embodiments, the cell index in cell group value may be configured in ascending order of cell ID among activated cells configured in the corresponding cell group. For example, if the activated cell ID of a cell configured in master cell group (MCG) is 0, 1, and 5, in the cell index in cell group corresponding to this MCG, a cell with a cell ID of 0 has a value of 0, a cell with a cell ID of 1 has a value of 1, and a cell with a cell ID of 5 has a value of 2. In this case, if the maximum number of cells that can be configured in a cell group is 16, all cells may be represented by a 4-bit cell index in the cell group.

The embodiments of the disclosure described and shown in the specification and the drawings have been presented to easily explain the technical contents of the disclosure and help understanding of the disclosure, and are not intended to limit the scope of the disclosure. That is, it will be apparent to those skilled in the art that other modifications and changes may be made thereto on the basis of the technical idea of the disclosure. Further, the above respective embodiments may be employed in combination, as necessary. For example, the embodiments of the disclosure may be partially combined to operate a base station and a terminal.

Further, although exemplary embodiments of the disclosure have been described and shown in the specification and the drawings by using particular terms, they have been used in a general sense merely to easily explain the technical contents of the disclosure and help understanding of the disclosure.

## Claims

1. A method performed by a terminal (300) in a communication system, the method comprising:
receiving (320), from a base station (310), a radio resource control, RRC, message including configuration information associated with a type 2 configured grant, the configuration information including an index of the type 2 configured grant, wherein the index of the type 2 configured grant is unique within a cell group;
receiving, from the base station, control information indicating activation (330) or deactivation (350) of the type 2 configured grant; and
transmitting, to the base station, a medium access control, MAC, control element, CE, including a field associated with the index of the type 2 configured grant,
wherein the field indicates whether the activation (335) or the deactivation (355) of the type 2 configured grant is confirmed.

2. The method of claim 1,
wherein the configuration information associated with the type 2 configured grant further includes at least one of information on a frequency hopping, information on a demodulation-reference signal, DM-RS, information on a modulation and coding scheme, MCS, information on a resource allocation type, information indicating whether a power control loop is to be used, information on a periodicity, or information on a configured grant timer.

3. A method performed by a base station (310) in a communication system, the method comprising:
transmitting (320), to a terminal (300), a radio resource control, RRC, message including configuration information associated with a type 2 configured grant, the configuration information including an index of the type 2 configured grant, wherein the index of the type 2 configured grant is unique within a cell group;
transmitting, to the terminal, control information indicating activation (330) or deactivation (350) of the type 2 configured grant; and
receiving, from the terminal, a medium access control, MAC, control element, CE, including a field associated with the index of the type 2 configured grant,
wherein the field indicates whether the activation (335) or the deactivation (355) of the type 2 configured grant is confirmed.

4. The method of claim 3,
wherein the configuration information associated with the type 2 configured grant further includes at least one of information on a frequency hopping, information on a demodulation-reference signal, DM-RS, information on a modulation and coding scheme, MCS, information on a resource allocation type, information indicating whether a power control loop is to be used, information on a periodicity, or information on a configured grant timer.

5. A terminal (300) comprising:
a transceiver (1710); and
a controller (1720) configured to control to:
receive, from a base station via the transceiver, a radio resource control, RRC, message including configuration information associated with a type 2 configured grant, the configuration information including an index of the type 2 configured grant, wherein the index of the type 2 configured grant is unique within a cell group,
receive, from the base station via the transceiver, control information indicating activation or deactivation of the type 2 configured grant, and
transmit, to the base station via the transceiver, a medium access control, MAC, control element, CE, including a field associated with the index of the type 2 configured grant,
wherein the field indicates whether the activation or the deactivation of the type 2 configured grant is confirmed.

6. The terminal of claim 5,
wherein the configuration information associated with the type 2 configured grant further includes at least one of information on a frequency hopping, information on a demodulation-reference signal, DM-RS, information on a modulation and coding scheme, MCS, information on a resource allocation type, information indicating whether a power control loop is to be used, information on a periodicity, or information on a configured grant timer.

7. A base station (310) comprising:
a transceiver (1610); and
a controller (1620) configured to control to:
transmit, to a terminal via the transceiver, a radio resource control, RRC, message including configuration information associated with a type 2 configured grant, the configuration information including an index of the type 2 configured grant, wherein the index of the type 2 configured grant is unique within a cell group,
transmit, to the terminal via the transceiver, control information indicating activation or deactivation of the type 2 configured grant, and
receive, from the terminal via the transceiver, a medium access control, MAC, control element, CE, including a field associated with the index of the type 2 configured grant,
wherein the field indicates whether the activation or the deactivation of the type 2 configured grant is confirmed.

8. The base station of claim 7,
wherein the configuration information associated with the type 2 configured grant further includes at least one of information on a frequency hopping, information on a demodulation-reference signal, DM-RS, information on a modulation and coding scheme, MCS, information on a resource allocation type, information indicating whether a power control loop is to be used, information on a periodicity, or information on a configured grant timer.

## Patentansprüche

1. Verfahren, das von einem Endgerät (300) in einem Kommunikationssystem durchgeführt wird, wobei das Verfahren Folgendes umfasst:
Empfangen (320) einer Radio Resource Control(RRC)-Nachricht, die Konfigurationsinformationen enthält, die einer konfigurierten Gewährung vom Typ 2 zugeordnet sind, von einer Basisstation (310), wobei die Konfigurationsinformationen einen Index der konfigurierten Gewährung vom Typ 2 enthalten, wobei der Index der konfigurierten Gewährung vom Typ 2 innerhalb einer Zellengruppe eindeutig ist;
Empfangen von Steuerungsinformationen, die die Aktivierung (330) oder Deaktivierung (350) der konfigurierten Gewährung vom Typ 2 anzeigen von der Basisstation; und
Übertragen eines Medienzugriffssteuerungs(MAC)-Steuerelements, CE, einschließlich eines Felds, das dem Index der konfigurierten Gewährung vom Typ 2 zugeordnet ist, an die Basisstation,
wobei das Feld angibt, ob die Aktivierung (335) oder die Deaktivierung (355) der konfigurierten Gewährung vom Typ 2 bestätigt ist.

2. Verfahren nach Anspruch 1,
wobei die Konfigurationsinformationen, die der konfigurierten Gewährung vom Typ 2 zugeordnet sind, ferner Informationen über ein Frequenzspringen, Informationen über ein Demodulationsreferenzsignal, DM-RS, Informationen über ein Modulations- und Codierungsschema, MCS, Informationen über einen Ressourcenzuweisungstyp, Informationen, die anzeigen, ob eine Leistungsregelschleife verwendet werden soll, Informationen über eine Periodizität und/oder Informationen über einen konfigurierten Gewährungs-Timer enthalten.

3. Verfahren, das von einer Basisstation (310) in einem Kommunikationssystem durchgeführt wird, wobei das Verfahren Folgendes umfasst:
Übertragen (320) einer Radio Resource Control(RRC)-Nachricht, die Konfigurationsinformationen enthält, die einer konfigurierten Gewährung vom Typ 2 zugeordnet sind, an ein Endgerät (300), wobei die Konfigurationsinformationen einen Index der konfigurierten Gewährung vom Typ 2 enthalten, wobei der Index der konfigurierten Gewährung vom Typ 2 innerhalb einer Zellengruppe eindeutig ist;
Übertragen von Steuerungsinformationen, die die Aktivierung (330) oder Deaktivierung (350) der konfigurierten Gewährung vom Typ 2 anzeigen, an das Endgerät; und
Empfangen eines Medienzugriffssteuerungs(MAC)-Steuerelements, CE, einschließlich eines Felds, das dem Index der konfigurierten Gewährung vom Typ 2 zugeordnet ist, von dem Endgerät,
wobei das Feld anzeigt, ob die Aktivierung (335) oder die Deaktivierung (355) der konfigurierten Gewährung vom Typ 2 bestätigt ist.

4. Verfahren nach Anspruch 3,
wobei die Konfigurationsinformationen, die der konfigurierten Gewährung vom Typ 2 zugeordnet sind, ferner Informationen über ein Frequenzspringen, Informationen über ein Demodulationsreferenzsignal, DM-RS, Informationen über ein Modulations- und Codierungsschema, MCS, Informationen über einen Ressourcenzuweisungstyp, Informationen, die anzeigen, ob eine Leistungsregelschleife verwendet werden soll, Informationen über eine Periodizität und/oder Informationen über einen konfigurierten Gewährungs-Timer enthalten.

5. Endgerät (300) umfassend:
einen Transceiver (1710); und
eine Steuerung (1720), die konfiguriert ist, um Folgendes zu steuern:
Empfangen einer Radio Resource Control(RRC)-Nachricht, die Konfigurationsinformationen enthält, die einer konfigurierten Gewährung vom Typ 2 zugeordnet sind, von einer Basisstation über den Transceiver, wobei die Konfigurationsinformationen einen Index der konfigurierten Gewährung vom Typ 2 enthalten, wobei der Index der konfigurierten Gewährung vom Typ 2 innerhalb einer Zellengruppe eindeutig ist,
Empfangen von Steuerungsinformationen, die die Aktivierung oder Deaktivierung der konfigurierten Gewährung vom Typ 2 anzeigen, von der Basisstation über den Transceiver, und
Übertragen eines Medienzugriffssteuerungs(MAC)-Steuerelements, CE, einschließlich eines Felds, das dem Index der konfigurierten Gewährung vom Typ 2 zugeordnet ist, an die Basisstation über den Transceiver,
wobei das Feld anzeigt, ob die Aktivierung oder die Deaktivierung der konfigurierten Gewährung vom Typ 2 bestätigt ist.

6. Endgerät nach Anspruch 5,
wobei die Konfigurationsinformationen, die der konfigurierten Gewährung vom Typ 2 zugeordnet sind, ferner Informationen über ein Frequenzspringen, Informationen über ein Demodulationsreferenzsignal, DM-RS, Informationen über ein Modulations- und Codierungsschema, MCS, Informationen über einen Ressourcenzuweisungstyp, Informationen, die anzeigen, ob eine Leistungsregelschleife verwendet werden soll, Informationen über eine Periodizität und/oder Informationen über einen konfigurierten Gewährungs-Timer enthalten.

7. Basisstation (310) umfassend:
einen Transceiver (1610); und
eine Steuerung (1620), die konfiguriert ist, um Folgendes zu steuern:
Übertragen (320) einer Radio Resource Control(RRC)-Nachricht, die Konfigurationsinformationen enthält, die einer konfigurierten Gewährung vom Typ 2 zugeordnet sind, an ein Endgerät über den Transceiver, wobei die Konfigurationsinformationen einen Index der konfigurierten Gewährung vom Typ 2 enthalten, wobei der Index der konfigurierten Gewährung vom Typ 2 innerhalb einer Zellengruppe eindeutig ist,
Übertragen von Steuerungsinformationen, die die Aktivierung oder Deaktivierung der konfigurierten Gewährung vom Typ 2 anzeigen, an das Endgerät über den Transceiver, und
Empfangen eines Medienzugriffssteuerungs(MAC)-Steuerelements, CE, einschließlich eines Felds, das dem Index der konfigurierten Gewährung vom Typ 2 zugeordnet ist, von dem Endgerät über den Transceiver,
wobei das Feld anzeigt, ob die Aktivierung oder die Deaktivierung der konfigurierten Gewährung vom Typ 2 bestätigt ist.

8. Basisstation nach Anspruch 7,
wobei die Konfigurationsinformationen, die der konfigurierten Gewährung vom Typ 2 zugeordnet sind, ferner Informationen über ein Frequenzspringen, Informationen über ein Demodulationsreferenzsignal, DM-RS, Informationen über ein Modulations- und Codierungsschema, MCS, Informationen über einen Ressourcenzuweisungstyp, Informationen, die anzeigen, ob eine Leistungsregelschleife verwendet werden soll, Informationen über eine Periodizität und/oder Informationen über einen konfigurierten Gewährungs-Timer enthalten.

## Revendications

1. Procédé exécuté par un terminal (300) dans un système de communication, le procédé comprenant :
recevoir (320), depuis une station de base (310), un message de commande de ressources radio, RRC, incluant des informations de configuration associées à une attribution configurée de type 2, les informations de configuration incluant un index de l'attribution configurée de type 2, où l'index de l'attribution configurée de type 2 est unique au sein d'un groupe de cellules ;
recevoir, depuis la station de base, des informations de commande indiquant l'activation (330) ou la désactivation (350) de l'attribution configurée de type 2 ; et
transmettre, à la station de base, un élément de contrôle, CE, de contrôle d'accès au support, MAC, incluant un champ associé à l'index de l'attribution configurée de type 2,
où le champ indique si l'activation (335) ou la désactivation (355) de l'attribution configurée de type 2 est confirmée.

2. Procédé selon la revendication 1,
où les informations de configuration associées à l'attribution configurée de type 2 incluent en outre au moins l'une parmi des informations sur un saut de fréquence, des informations sur un signal de référence de démodulation, DM-RS, des informations sur un schéma de modulation et de codage, MCS, des informations sur un type d'attribution de ressource, des informations indiquant si une boucle de régulation de puissance doit être utilisée, des informations sur une périodicité ou des informations sur un temporisateur d'attribution configuré.

3. Procédé exécuté par une station de base (310) dans un système de communication, le procédé comprenant :
transmettre (320), à un terminal (300), un message de commande de ressources radio, RRC, incluant des informations de configuration associées à une attribution configurée de type 2, les informations de configuration incluant un index de l'attribution configurée de type 2, où l'index de l'attribution configurée de type 2 est unique au sein d'un groupe de cellules ;
transmettre, au terminal, des informations de contrôle indiquant l'activation (330) ou la désactivation (350) de l'attribution configurée de type 2 ; et
recevoir, depuis le terminal, un élément de contrôle, CE, de contrôle d'accès au support, MAC, incluant un champ associé à l'index de l'attribution configurée de type 2,
où le champ indique si l'activation (335) ou la désactivation (355) de l'attribution configurée de type 2 est confirmée.

4. Procédé selon la revendication 3,
où les informations de configuration associées à l'attribution configurée de type 2 incluent en outre au moins l'une parmi des informations sur un saut de fréquence, des informations sur un signal de référence de démodulation, DM-RS, des informations sur un schéma de modulation et de codage, MCS, des informations sur un type d'attribution de ressource, des informations indiquant si une boucle de régulation de puissance doit être utilisée, des informations sur une périodicité ou des informations sur un temporisateur d'attribution configuré.

5. Terminal (300) comprenant :
un émetteur-récepteur (1710) ; et
un contrôleur (1720) configuré pour commander :
la réception, depuis une station de base via l'émetteur-récepteur, d'un message de commande de ressources radio, RRC, incluant des informations de configuration associées à une attribution configurée de type 2, les informations de configuration incluant un index de l'attribution configurée de type 2, où l'index de l'attribution configurée de type 2 est unique au sein d'un groupe de cellules,
la réception, depuis la station de base via l'émetteur-récepteur, d'informations de commande indiquant l'activation ou la désactivation de l'attribution configurée de type 2, et
la transmission, à la station de base via l'émetteur-récepteur, d'un élément de contrôle, CE, de contrôle d'accès au support, MAC, incluant un champ associé à l'index de l'attribution configurée de type 2,
où le champ indique si l'activation ou la désactivation de l'attribution configurée de type 2 est confirmée.

6. Terminal selon la revendication 5,
où les informations de configuration associées à l'attribution configurée de type 2 incluent en outre au moins l'une parmi des informations sur un saut de fréquence, des informations sur un signal de référence de démodulation, DM-RS, des informations sur un schéma de modulation et de codage, MCS, des informations sur un type d'attribution de ressource, des informations indiquant si une boucle de régulation de puissance doit être utilisée, des informations sur une périodicité ou des informations sur un temporisateur d'attribution configuré.

7. Station de base (310) comprenant :
un émetteur-récepteur (1610) ; et
un contrôleur (1620) configuré pour commander :
la transmission, à un terminal via l'émetteur-récepteur, d'un message de commande de ressources radio, RRC, incluant des informations de configuration associées à une attribution configurée de type 2, les informations de configuration incluant un index de l'attribution configurée de type 2, où l'index de l'attribution configurée de type 2 est unique au sein d'un groupe de cellules,
la transmission, au terminal via l'émetteur-récepteur, d'informations de contrôle indiquant l'activation ou la désactivation de l'attribution configurée de type 2, et
la réception, depuis le terminal via l'émetteur-récepteur, d'un élément de contrôle, CE, de contrôle d'accès au support, MAC, incluant un champ associé à l'index de l'attribution configurée de type 2,
où le champ indique si l'activation ou la désactivation de l'attribution configurée de type 2 est confirmée.

8. Station de base selon la revendication 7,
où les informations de configuration associées à l'attribution configurée de type 2 incluent en outre au moins l'une parmi des informations sur un saut de fréquence, des informations sur un signal de référence de démodulation, DM-RS, des informations sur un schéma de modulation et de codage, MCS, des informations sur un type d'attribution de ressource, des informations indiquant si une boucle de régulation de puissance doit être utilisée, des informations sur une périodicité ou des informations sur un temporisateur d'attribution configuré.
